# FASCICULE DE BREVET EUROPEEN

(11) **EP 3 235 680 B1**
(45) Date de publication et mention de la délivrance du brevet: **18.12.2019**
(21) Numéro de dépôt: 17156548.4
(22) Date de dépôt: 16.02.2017
(51) Int. Cl.: B60N 2/427, B64D 25/04, B64D 11/06, B60N 2/42, F16F 7/00

(54) **SIÈGE D'AÉRONEF TOLERANT AUX DÉFORMATIONS DU PLANCHER**
BODENVERFORMUNG TRAGENDER LUFTFAHRZEUGSITZ
FLOOR DEFORMATION TOLERATING AIRCRAFT SEAT

(30) Priorité: 01.03.2016 FR 1600346
(43) Date de publication de la demande: 25.10.2017
(73) Titulaire: Airbus Helicopters, 13725 Marignane Cedex (FR)
(72) Inventeur: CROZAT, Pierre, 13560 SENAS (FR); JOFFRE, Jean-François, 13500 MARTIGUES (FR); STAWIAK, Marcin, 90-245 LODZ (PL)
(74) Mandataire: GPI & Associés

(56) Documents cités:
- EP-A2- 0 679 573
- WO-A1-2013/076255
- FR-A1- 2 495 101
- GB-A- 2 313 214
- US-A- 4 128 217
- US-A1- 2013 228 652

## Description

La présente invention est du domaine des sièges pour véhicule et pour aéronef en particulier. La présente invention a pour objet un siège d'aéronef comportant un piètement capable d'absorber les déformations du plancher de l'aéronef notamment lors d'un atterrissage violent ou bien d'un crash.

Tout siège équipant un aéronef doit assurer une protection du passager qui occupe ce siège notamment lors d'un atterrissage violent ou bien d'un crash. Ce siège doit en particulier absorber des chocs violents et/ou une forte décélération verticale que peut subir l'aéronef.

Dans ce but, les sièges pour aéronefs intègrent des moyens de protection des passagers couramment constitués d'une part par la structure du siège et d'autre part par un ou plusieurs dispositifs d'absorption d'énergie. Un dispositif d'absorption d'énergie permet de dissiper tout ou partie de l'énergie cinétique emmagasinée par le passager du siège lorsqu'il est soumis à des chocs violents et/ou à une forte décélération, notamment en cas de crash. Un tel dispositif d'absorption d'énergie permet ainsi de limiter les dommages corporels subis par le passager du siège, en particulier la compression de la colonne vertébrale.

Selon une forme connue de réalisation, un siège comporte un piètement, un baquet comportant une assise et un dossier ainsi qu'un ou plusieurs dispositifs d'absorption d'énergie. Le piètement est ancré au plancher de l'aéronef par l'intermédiaire de plusieurs points de fixation et supporte le baquet qui peut éventuellement coulisser par rapport au piètement. Un ou plusieurs dispositifs d'absorption d'énergie relient le baquet au piètement. Le baquet est ainsi capable de coulisser par rapport au piètement à partir d'un effort correspondant à un certain niveau de décélération afin de dissiper une partie de l'énergie. Un piètement est par exemple composé de deux pieds en forme de « L », sur lesquels est fixé le baquet.

Un dispositif d'absorption d'énergie comprend généralement des moyens de maintien déformables, de sorte que le baquet soit fermement maintenu en situation normale d'utilisation. Lors d'un crash, la forte décélération subie par l'aéronef provoque une déformation de ces moyens de maintien provoquant ainsi un coulissement dirigé vers le bas du baquet par rapport au piètement. De fait, au moins une part de l'énergie subie par le passager lors d'un crash est dissipée dans cette déformation des moyens de maintien. On parle alors de déploiement du dispositif d'absorption d'énergie pour désigner la déformation de ces moyens de maintien. Un dispositif d'absorption d'énergie est par exemple décrit dans le document FR2930613, le document FR2930520 décrivant un siège d'aéronef équipé d'un tel dispositif.

Par ailleurs, pour qualifier un siège aéronautique, la réglementation et les normes applicables requièrent l'introduction d'une précontrainte statique de la structure du siège lors des essais de validation afin de simuler l'effet sur le siège des déformations du plancher obtenues lors du crash. Le siège doit alors être structuré pour absorber l'énergie cinétique du passager conformément aux exigences de la réglementation aéronautique en tenant compte de ces déformations du plancher et sans se désolidariser du plancher.

L'application de ces déformations du plancher au piètement du siège induit une déformation de ce piètement qui est transmise aux liaisons mécaniques du baquet avec le piètement et, par suite, au baquet. Le baquet et, de fait, l'assise et le dossier subissent en particulier un vrillage qui peut être important. Cette mise sous contrainte du piètement ainsi que le vrillage provoqué sur le baquet et ses liaisons mécaniques avec le piètement entraînent des effets importants sur le siège et ses composants.

Tout d'abord, l'application de ces déformations du plancher au piètement provoque l'apparition de contraintes mécaniques statiques au niveau des composants du siège, notamment les fixations du piètement avec le plancher, les moyens de liaison et de guidage du baquet vis-à-vis du piètement et enfin le baquet lui même.

En particulier, ces contraintes mécaniques statiques apparues suite aux déformations du plancher peuvent entrainer un dysfonctionnement d'un dispositif d'absorption d'énergie tel qu'un déploiement partiel limitant l'énergie dissipée, voire un blocage complet de ce dispositif d'absorption d'énergie. Par suite, ce dispositif d'absorption d'énergie n'assure plus totalement sa fonction et n'absorbe pas l'énergie prévue en cas de choc.

Par ailleurs, ces déformations du plancher peuvent également entrainer l'apparition de frictions dans les moyens de guidage du baquet vis-à-vis du piètement. La friction est un phénomène de frottement interne au moyen de guidage difficile à maitriser et générateur de phénomènes d'accrochages et/ou de glissements saccadés des éléments coulissants que comportent ces moyens de guidage, voire de leur blocage total. Ces frictions peuvent alors provoquer un fonctionnement aléatoire des dispositifs d'absorption d'énergie dégradant la qualité de l'absorption de l'énergie lors du crash.

De même, des phénomènes de matage ou de génération de copeaux peuvent également apparaître dans les moyens de guidage et provoquer leur dysfonctionnement et, par suite un fonctionnement aléatoire des dispositifs d'absorption d'énergie.

En particulier, des variations brutales de l'absorption d'énergie peuvent se produire provoquant des pics d'efforts dans la colonne vertébrale du passager, qui peuvent être fatals.

La prise en compte de ces déformations du plancher impose donc un surdimensionnement des composants du siège et une complexité de ces moyens de liaison et de guidage pour permettre un fonctionnement correct du siège lors d'un crash. Ceci implique donc que les moyens de guidage et les éléments coulissants soient renforcés et conçus en particulier pour limiter l'apparition de frictions.

De plus, suite à ce vrillage du baquet, l'assise et le dossier présentent des surfaces de contact avec le passager déformées, qui ont pour conséquence le glissement et/ou la dissymétrie de positionnement du passager lors d'un crash. Ce positionnement du passager induit des déplacements aléatoires de son corps pouvant générer la création d'efforts supplémentaires dans ses membres, en particulier au niveau de ses articulations et provoquer des dommages corporels supplémentaires.

En outre, on connait le document FR 2495101 qui décrit un siège d'aéronef comportant un baquet, muni d'une assise et d'un dossier, un support reliant le baquet au plancher, un caisson pratiquement indéformable solidaire du baquet et plusieurs dispositifs d'absorption d'énergie. Ce siège permet de dissocier les dispositifs d'absorption d'énergie verticalement et horizontalement afin qu'ils soient indépendants de l'état de vrillage du plancher. Toutefois, le support n'empêche pas que des contraintes consécutives au vrillage du plancher soient transmises au baquet et à ses composants.

On connait également le document WO 2008/073035 décrivant un siège pour véhicule comportant une assise triangulaire et un dossier auquel est liée l'assise par des liaisons de type pivot. L'avant de l'assise est liée par l'intermédiaire d'une liaison de type pivot à un support avant fixé au plancher du véhicule alors que le dossier est lié directement au plancher par des liaisons de type pivot. L'assise et le dossier ont des structures tubulaires. Le siège est ainsi fixé par trois points au plancher via trois liaisons de type pivot.

De plus, le document FR 2735096 décrit un siège orientable pour véhicule, notamment un avion. Ce siège orientable comporte une embase, fixée au plancher du véhicule et munie d'un plateau supérieur, ainsi qu'une assise fixée sur le plateau supérieur par l'intermédiaire de liaisons débrayables permettant des déplacements de l'assise parallèlement au plateau supérieur. L'embase comporte également au moins deux composants reliés au plateau supérieur et articulés selon des axes d'articulation orthogonaux et parallèles au plateau supérieur. Cette embase permet d'éviter ainsi qu'un vrillage du plancher ne dépassant une limite entraine une déformation de l'assise voire son échappement de l'embase.

On connait aussi le document US 3582133 qui décrit un siège pour véhicule, en particulier pour une voiture. Ce siège est fixé par trois points au plancher via trois liaisons de type pivot et comporte au moins un dispositif d'absorption d'énergie. Chaque dispositif d'absorption d'énergie est agencé entre le siège et un de ces points de fixation au plancher. De plus, le plancher peut comporter une zone déformable au niveau d'au moins un point de fixation afin de dissiper une partie de l'énergie lors d'un choc.

En outre, le document GB 2313214 décrit un siège pour véhicule muni d'un dispositif de suspension active afin de limiter les mouvements du siège lors des mouvements du véhicule. Le siège comporte un soubassement formé par des vérins et liés par l'intermédiaire de liaisons à rotule d'une part à un support solidaire du siège et d'autre part au plancher du véhicule.

Par ailleurs, le document US 4128217 décrit un support de fixation d'un siège sur le plancher d'un aéronef permettant d'isoler le siège des déformations du plancher en cas de crash de l'aéronef.

Enfin, on trouve dans l'arrière plan technologique de l'invention les documents US 2013/228652 et EP 0679573 qui décrivent des sièges à absorption d'énergie pour aéronef ainsi que le document WO 2013/076255 qui décrit un élément de liaison extensible pour la fixation d'un siège sur le plancher d'un véhicule.

Par ailleurs, certaines exigences supplémentaires sont à prendre en compte dans la conception et le choix d'un siège pour véhicule et en particulier pour un aéronef.

Tout d'abord, l'encombrement du siège doit être minimisé afin par exemple de faciliter son implantation dans la cabine du véhicule, notamment pour optimiser le nombre de sièges qui peuvent être installés dans cette cabine. De plus, la masse du siège doit également être minimisée afin de limiter son effet sur la masse du véhicule. Enfin, la structure du siège doit être la plus simple possible afin de limiter cette masse et le coût de fabrication du siège.

La présente invention a alors pour objet un siège de véhicule, tel un aéronef, permettant de répondre aux exigences de la réglementation aéronautique en s'affranchissant des limitations mentionnées ci-dessus. La présente invention a pour objet un siège de véhicule comportant un piètement capable d'absorber les déformations du plancher de l'aéronef en cas de forte décélération, limitant ainsi les contraintes mécaniques consécutives à ces déformations du plancher transmises au baquet du siège afin d'éviter de générer un vrillage significatif du baquet.

Le siège selon l'invention comprend les caractéristiques de la revendication 1.

Le véhicule est par exemple un aéronef, tel un avion ou bien un aéronef à voilure tournante, muni d'une cabine incluant au moins un plancher.

Le plancher du véhicule est adapté pour recevoir un ou plusieurs sièges. Le plancher comporte par exemple des ancrages fixes sur lesquels est fixé le piètement de chaque siège.

Le plancher peut également comporter des rails dans lesquels est fixé le piètement. Ces rails permettent ainsi à chaque siège de coulisser indépendamment afin par exemple d'adapter l'espace entre chaque siège et/ou de modifier facilement l'implantation de ces sièges.

Ces rails sont en général agencés de façon longitudinale dans le véhicule, c'est-à-dire selon une première direction orientée de l'arrière vers l'avant du véhicule. Toutefois, ces rails peuvent également être implantés de façon transversale dans le véhicule, c'est-à-dire d'un côté à l'autre du véhicule selon une seconde direction par exemple perpendiculaire à la première direction.

En outre, trois directions privilégiées formant un repère orthogonal (X,Y,Z) sont attachées au siège. Une direction longitudinale X s'étend de l'arrière du siège vers l'avant du siège, à savoir du dossier vers le nez de l'assise et une direction transversale Y s'étend d'un flanc de l'assise vers l'autre flanc de l'assise perpendiculairement à la direction longitudinale X. Une direction d'élévation Z s'étend de bas en haut, à savoir du plancher vers l'assise. Le dossier est lié à l'assise selon une direction sensiblement parallèle à la direction transversale Y.

Généralement, un siège est donc implanté dans l'axe d'avancement du véhicule, les directions longitudinale X et transversale Y du siège correspondant aux directions longitudinale et transversale du véhicule. Le siège peut être implanté dans le sens d'avancement du véhicule, à savoir « face à la marche » ou bien dans le sens contraire à l'avancement du véhicule, à savoir « dos à la marche ». Toutefois, toute autre implantation du siège dans le véhicule est également possible.

Lors d'une décélération importante du véhicule, par exemple consécutive à un choc violent ou un accident, le plancher du véhicule se déforme. Les déformations du plancher se traduisent par un déplacement d'un ou plusieurs points de fixation du siège sur le plancher, éventuellement via un déplacement des rails le cas échéant. Par suite, un ou plusieurs pieds du piètement peuvent se déplacer les uns par rapport aux autres pour suivre les déformations du plancher.

Avantageusement, les degrés de mobilité disponibles au niveau des liaisons mécaniques du piètement entre le baquet et le plancher fournissent une capacité de déplacement du baquet vis-à-vis du piètement et du plancher lorsque celui-ci se déforme. Par suite, le baquet peut se déplacer vis-à-vis du piètement et du plancher sans subir de contraintes mécaniques importantes consécutives aux déformations du plancher. En conséquence, le baquet ne subit pas de vrillage.

Selon un premier mode de réalisation du siège selon l'invention, le baquet est lié au plancher du véhicule d'une part par les premiers pieds via les premières et deuxièmes liaisons mécaniques et d'autre part uniquement par les troisièmes liaisons mécaniques que comporte le piètement du siège.

Selon un deuxième mode de réalisation du siège selon l'invention, le baquet est lié au plancher d'une part par les premiers pieds via les premières et deuxièmes liaisons mécaniques et d'autre part par l'intermédiaire de troisièmes et quatrièmes liaisons mécaniques et de seconds pieds.

En effet, dans ce deuxième mode de réalisation, le piètement comporte également des seconds pieds et des quatrièmes liaisons mécaniques, une quatrième liaison mécanique et un second pied étant inséré entre le baquet et chaque troisième liaison mécanique. Le baquet est ainsi lié à chaque troisième liaison mécanique par l'intermédiaire d'une quatrième liaison mécanique et d'un second pied, chaque troisième liaison mécanique reliant un second pied au plancher et chaque quatrième liaison mécanique reliant un second pied au baquet.

Chaque quatrième liaison mécanique est de préférence munie d'au moins un degré de liberté et uniquement de degré(s) de liberté en rotation. Par exemple, chaque quatrième liaison mécanique est munie d'un seul degré de liberté en rotation et est formé par une liaison de type pivot. Chaque quatrième liaison mécanique peut aussi comporter trois degrés de liberté en rotation et être formée par une liaison à rotule.

De plus, chaque quatrième liaison mécanique peut comporter au moins un élément de blocage constituant une butée limitant le déplacement en rotation d'un second pied. De même, un élément de blocage peut intégrer un élément de friction générant des frottements au sein de cette quatrième liaison mécanique et empêchant un mouvement libre de cette quatrième liaison mécanique. Chaque quatrième liaison mécanique est ainsi mobile uniquement sous l'application d'un effort mécanique par exemple lorsque le siège subit une forte décélération.

Toutefois, chaque quatrième liaison mécanique peut également n'avoir aucun degré de liberté et être formée par une liaison de type encastrement. Ce deuxième mode de réalisation est alors très proche du premier mode de réalisation, chaque second pied pouvant être considéré comme faisant partie du baquet.

Les premier et deuxième modes de réalisation peuvent se décliner selon plusieurs variantes. Les variantes une à cinq concernent les première et deuxièmes liaisons mécaniques et peuvent être combinées avec les variantes six à neuf qui concernent les troisièmes liaisons mécaniques.

Selon une première variante, chaque première liaison mécanique et chaque deuxième liaison mécanique sont munies de trois degrés de liberté en rotation et formées respectivement par une liaison à rotule.

Selon une deuxième variante, chaque première liaison mécanique est munie d'un degré de liberté en rotation selon un premier axe et chaque deuxième liaison mécanique est munie de deux degrés de liberté en rotation selon des troisième et quatrième axes non parallèles entre eux, le premier axe étant parallèle à un des troisième et quatrième axes.

Selon une troisième variante, chaque première liaison mécanique est munie de deux degrés de liberté en rotation selon des premier et deuxième axes non parallèles entre eux et chaque deuxième liaison mécanique est munie de deux degrés de liberté en rotation selon des troisième et quatrième axes non parallèles entre eux, un des premier et deuxième axes étant non parallèle aux troisième et quatrième axes, l'autre des premier et deuxième axes étant parallèle à un des troisième et quatrième axes.

Selon une quatrième variante, chaque première liaison mécanique est munie de deux degrés de liberté en rotation selon des premier et deuxième axes non parallèles entre eux et chaque deuxième liaison mécanique est munie de deux degrés de liberté en rotation selon des troisième et quatrième axes non parallèles entre eux, les premier et deuxième axes étant respectivement parallèles aux troisième et quatrième axes.

Chaque première liaison mécanique peut ainsi être formée par deux liaisons de type pivot et chaque deuxième liaison mécanique peut être formée par deux liaisons de type pivot.

Entre outre, pour ces troisième et quatrième variantes, chaque première liaison mécanique peut être munie d'un troisième degré de liberté en rotation.

Selon une cinquième variante, chaque première liaison mécanique est munie d'un degré de liberté en rotation selon un premier axe et chaque deuxième liaison mécanique est munie d'au moins trois degrés de liberté, dont deux degrés en rotation, selon des troisième et quatrième axes non parallèles entre eux, le premier axe étant parallèle à un des troisième et quatrième axes.

Chaque deuxième liaison mécanique peut typiquement comporter deux ou trois degrés de liberté en rotation et un degré de liberté en translation selon un axe par exemple perpendiculaire au premier axe.

Par exemple, chaque première liaison mécanique est formée par une liaison de type pivot selon le premier axe, et chaque deuxième liaison mécanique est formée par une liaison de type pivot glissant selon le troisième axe et une liaison de type pivot selon le quatrième axe.

Par ailleurs, ce degré de liberté en translation peut être transféré de la deuxième liaison à la première liaison sans modifier de façon importante le comportement du siège lors d'une déformation du plancher de l'aéronef.

De préférence, pour ces variantes, les premier et deuxième axes sont parallèles à un premier plan et les troisième et quatrième axes sont parallèles à un second plan.

Par exemple, pour la troisième variante, les premier et troisième axes sont parallèles à la direction longitudinale X, le quatrième axe est parallèle à la direction transversale Y et, le cas échéant, le deuxième axe est parallèle à la direction verticale Z. Le premier plan est ainsi formé par les directions longitudinale X et verticale Z alors que le second plan est formé par les directions longitudinale X et transversale Y.

Pour la quatrième variante, les premier et troisième axes sont parallèles à la direction longitudinale X alors que les deuxième et quatrième axes sont parallèles à la direction transversale Y. Le premier plan et le second plan sont ainsi parallèles et formés par les directions longitudinale X et transversale Y.

Selon une sixième variante, chaque troisième liaison mécanique est munie de trois degrés de liberté en rotation et est formée par une liaison à rotule.

Selon une septième variante, chaque troisième liaison mécanique est munie de deux degrés de liberté en rotation selon les cinquième et sixième axes non parallèles entre eux et est formée par deux liaisons de type pivot. Ces cinquième et sixième axes sont de préférence parallèles à un troisième plan.

En outre, lorsque chaque deuxième liaison mécanique est munie de deux degrés de liberté en rotation selon des troisième et quatrième axes, ces cinquième et sixième axes sont de préférence parallèles respectivement aux troisième et quatrième axes.

Selon une huitième variante, chaque troisième liaison mécanique est munie de trois degrés de liberté, dont deux degrés de liberté en rotation selon les cinquième et sixième axes et un degré de liberté en translation selon un de ces deux axes, et est formée par une liaison de type pivot glissant et une liaison de type pivot.

Selon une neuvième variante, chaque troisième liaison mécanique est munie de quatre degrés de liberté, dont deux degrés de liberté en rotation et deux degrés de liberté en translation selon les cinquième et sixième axes, et est formée par deux liaisons de type pivot glissant.

Pour le premier mode de réalisation d'un siège selon l'invention, chaque troisième liaison mécanique selon une de ces variantes six à neuf constitue ainsi une articulation munie d'au moins deux degrés de liberté en rotation et agencée entre le plancher et le baquet. De préférence, cette troisième liaison mécanique comporte également un degré de liberté en translation selon le cinquième axe. Ce cinquième axe est par exemple parallèle au troisième axe de la deuxième liaison et à la direction longitudinale X du siège.

Pour le deuxième mode de réalisation du siège, ce degré de liberté en translation de cette troisième liaison mécanique n'est pas nécessaire et compensé par au moins un degré de liberté en rotation de la quatrième liaison.

Pour ces neuf variantes, les deux premiers pieds peuvent être selon plusieurs configurations différentes. Les deux premiers pieds génèrent une forme en « V », les deux premières directions reliant respectivement les deux extrémités de chacun des premiers pieds n'étant pas parallèles entre elles. Par suite, cette forme en « V » peut être orientée la pointe en bas ou bien être inversée, la pointe étant orientée vers le haut.

Selon une première configuration, les deux premiers pieds génèrent une forme en « V » avec la pointe orientée vers le bas. La distance entre les deux deuxièmes liaisons mécaniques agencées entre les seconds pieds et le plancher est nettement inférieure à la distance entre les premières liaisons agencées entre les seconds pieds et le baquet. De plus, les deux deuxièmes liaisons mécaniques sont proches l'une de l'autre ce qui favorise le non vrillage du baquet lorsque le plancher se déforme.

De préférence, les deux premiers pieds sont liés mécaniquement entre eux à une de leurs extrémités, au niveau de la deuxième liaison mécanique afin que le piètement ait une première interface comportant quatre points de liaison avec le baquet et une seconde interface comportant trois points de liaison avec le plancher.

Selon cette première configuration, une dixième variante spécifique à cette première configuration est possible. Selon cette dixième variante, chaque première liaison mécanique n'est munie d'aucun degré de liberté et est formée par une liaison de type encastrement alors que chaque deuxième liaison mécanique est munie de d'au moins deux degrés en rotation. Chaque deuxième liaison mécanique comporte par exemple trois degrés de liberté en rotation et est formée par une liaison à rotule. Les deux premiers pieds, n'ont alors aucun degré de liberté entre eux.

De plus, chaque deuxième liaison mécanique peut également comporter un degré de liberté en translation, de préférence parallèlement à la direction transversale Y du siège.

Selon une deuxième configuration, les deux premiers pieds génèrent une forme en « V » avec la pointe orientée vers le haut. La distance entre les deux deuxièmes liaisons mécaniques entre les seconds pieds et le plancher est nettement supérieure à la distance entre les premières liaisons entre les seconds pieds et le baquet. De plus, les deux premières liaisons mécaniques sont proches l'une de l'autres ce qui permet de limiter les contraintes transmises au baquet lors des déformations du plancher et par suite, de favoriser le non vrillage du baquet.

De préférence, les deux premiers pieds sont liés mécaniquement entre eux à une de leurs extrémités, au niveau de la première liaison mécanique afin que le piètement ait une première interface comportant trois points de liaison avec le baquet et une seconde interface comportant quatre points de liaison avec le plancher. Les deux premiers pieds ont alors au moins un degré de liberté en rotation entre eux.

Cette deuxième configuration permet avantageusement d'avoir un appui isostatique du baquet sur le piètement. De plus, le piètement a un appui en quatre points avec le plancher ce qui permet la fixation du siège sur un plancher standard, comportant usuellement deux rails orientés parallèlement à l'axe longitudinal du véhicule.

En outre, quelques soient ces variantes, les deux premiers pieds peuvent être de longueurs identiques, leur implantation pouvant alors être symétrique. Cependant, les longueurs deux premiers pieds peuvent également être différentes.

De même, les seconds pieds peuvent être de longueurs identiques ou bien différentes.

Par ailleurs, le piètement est en général fixé sur un plancher sensiblement horizontal. Toutefois, le plancher peut pour certains véhicules remonter sur une ou plusieurs parois latérales du véhicule. De plus, le piètement peut également être fixé directement sur une paroi latérale du véhicule. Dans ce cas, cette paroi latérale peut être assimilée au plancher dans le cadre de l'invention, le point de fixation du siège ayant un comportement analogue. Il est alors possible que les deux premiers pieds aient une longueur différente.

Enfin, indépendamment de ces deux modes de réalisation, les premiers pieds peuvent être agencés à l'avant du siège, les troisièmes liaisons mécaniques, et pour le deuxième mode de réalisation les seconds pieds, étant alors agencées à l'arrière du siège. Ces premiers pieds peuvent également être agencés à l'arrière du siège, les troisièmes liaisons mécaniques, et pour le deuxième mode de réalisation les seconds pieds, étant alors agencées à l'avant du siège.

Une implantation des premiers pieds à l'avant ou bien à l'arrière du siège ne modifie pas de façon significative le comportement du siège lors d'une forte décélération du véhicule et permet dans tous les cas de garantir l'absence de vrillage du baquet du siège.

Par ailleurs, le piètement du siège selon l'invention peut intégrer des flexibilités en rotation autour d'un ou plusieurs axes, chaque flexibilité constituant alors une liaison mécanique munie d'un ou plusieurs degrés de liberté en rotation. Ces flexibilités peuvent notamment être utilisées au niveau des pieds du piètement.

En outre, les liaisons mécaniques du piètement peuvent intégrer une friction, cette friction imposant un effort minimum pour entrainer la mobilité de cette liaison mécanique. Cette friction permet d'éviter une souplesse ou un petit mouvement du siège au moindre déplacement du passager occupant ce siège. Par contre, dès qu'un effort minimum est appliqué sur cette liaison mécanique, par exemple suite à une déformation du plancher et/ou une forte décélération du siège, cette liaison mécanique se comporte comme une liaison mécanique libre, c'est-à-dire sans friction.

Une telle friction est en particulier nécessaire pour les liaisons de type pivot glissant que peut comporter le piétement du siège afin d'éviter des mouvements incessants du siège. De plus, chaque liaison de type pivot glissant comporte également des butées limitant l'amplitude ses déplacements en translation.

Le baquet du siège selon l'invention, qui comporte l'assise et le dossier, peut être réalisé en matériaux composites, par exemple en fibres de verre ou de carbone et résine époxy. L'utilisation de matériaux composites permet avantageusement de réduire la masse du baquet. Le baquet peut également comporter des composants en métal et/ou en plastique.

Les premiers et seconds pieds peuvent être réalisés en métal, par exemple en aluminium, ou bien en matériaux composites, par exemple à partir de profilés extrudés « résinés ».

En outre, le siège comporte généralement un système de retenue constitué par exemple par une ceinture de sécurité ou bien un harnais. Ce système de retenue permet de maintenir le passager fixé au siège. L'absence de vrillage du baquet permet avantageusement de préserver la géométrie initiale du baquet et de garantir ainsi le maintien d'un positionnement correct du passager sur l'assise et le dossier du siège, sans dissymétrie ni glissement excessif, ainsi que vis-à-vis du système de retenue.

Par suite, les efforts provoqués par le système de retenue sur le passager lors d'une forte décélération sont appliqués sur les zones prévues du corps du passager évitant ainsi de provoquer des dommages corporels supplémentaires. Ce maintien d'un positionnement correct du passager permet également de limiter les contraintes mécaniques additionnelles générées par le passager sur le baquet et le piètement du siège et de limiter ainsi le risque de rupture du siège.

Par ailleurs, un siège pour aéronef comporte généralement au moins un dispositif d'absorption d'énergie afin de dissiper de l'énergie lors d'un accident ou bien un atterrissage violent de l'aéronef. Un tel dispositif, décrit par exemple dans le document FR2930613, est agencé entre l'assise et le baquet du siège. Le siège peut également comporter au moins un moyen fusible liant l'assise au baquet. Chaque moyen fusible est par exemple formé par une bride destinée à se rompre lors d'une forte décélération du véhicule afin de permettre au dispositif d'absorption d'énergie de se déployer et de dissiper une partie de l'énergie emmagasinée par le passager du siège.

Le siège selon l'invention comporte alors une cinquième liaison mécanique munie d'un degré de liberté en rotation autour d'un neuvième axe entre l'assise et le baquet. L'assise est alors liée au baquet d'une part par chaque dispositif d'absorption d'énergie et d'autre part par la cinquième liaison mécanique afin de dissiper une partie de l'énergie lors d'un accident du véhicule. Cette cinquième liaison mécanique est typiquement une liaison de type pivot selon le neuvième axe.

Ainsi, lors d'une forte décélération du véhicule, les efforts générés par le passager présent sur l'assise sont transmis au baquet par les moyens fusibles et la cinquième liaison mécanique. Quand un niveau de décélération suffisant est atteint, les brides se rompent, le déploiement de chaque dispositif d'absorption d'énergie se produit et l'assise bascule autour du premier axe de la cinquième liaison mécanique. La descente de l'assise est alors ralentie par l'intermédiaire de chaque dispositif d'absorption d'énergie.

De préférence, l'assise est liée au baquet par la cinquième liaison mécanique agencée au niveau du nez d'assise, c'est-à-dire la partie avant de l'assise et le neuvième axe est de préférence parallèle à la direction transversale Y du siège, lorsque le siège est implanté dans le véhicule selon la direction longitudinale du véhicule.

L'absence de vrillage du baquet suite aux déformations du plancher du véhicule limite voire supprime l'apparition de contraintes mécaniques statiques au niveau des composants du siège. En conséquence, le risque de dysfonctionnement de chaque dispositif d'absorption d'énergie est avantageusement réduit voire supprimé, tel qu'un fonctionnement aléatoire de chaque dispositif d'absorption d'énergie, des variations brutales de l'absorption d'énergie, voire une absence de déploiement. Avantageusement, la capacité du siège selon l'invention à absorber de l'énergie n'est donc pas impactée par la présence ou non des déformations du plancher du véhicule.

De plus, l'apparition de frictions dans les moyens de guidage que peut comporter le siège entre le baquet et le piètement est également réduite voire supprimée évitant ainsi de générer des phénomènes d'accrochages, de glissements saccadés ou de blocage total de ces moyens de guidage.

L'absence de vrillage du baquet évite enfin un surdimensionnement des composants du siège généralement nécessaire pour prendre en compte de telles déformations du plancher. Par suite, le baquet, n'étant plus soumis directement aux contraintes mécaniques liées aux déformations du plancher, peut être entièrement rigide. De plus, la réalisation du piètement peut être simplifiée, en utilisant des composants mécaniques plus simples, demandant moins de précision de fabrication et en nombre réduit. Cette simplification du piètement permet ainsi une augmentation intrinsèque de la fiabilité du siège, une réduction sensible du coût de fabrication ainsi qu'une réduction de la masse du siège.

Par ailleurs, ce comportement du siège selon l'invention lors d'une forte décélération du véhicule est indépendant de la position et de l'orientation du siège dans le véhicule et, par suite, de la façon dont les déformations du plancher sont appliquées au siège.

En outre, le comportement du siège selon l'invention destiné à un aéronef est analogue lors d'un crash que le plancher soit déformé ou non, que lors des essais de validation d'un siège requis par la réglementation aéronautique dans lesquels une déformation est imposée au plancher de l'aéronef

Le baquet du siège selon l'invention peut être remplacé par une platine formée par exemple par un plateau. Le piètement assure l'interface entre le plancher du véhicule et la platine. Dans ce cas, l'objet de l'invention est un support installé dans un véhicule et sur lequel peuvent être installés différents matériels.

Une telle platine peut être utilisée comme interface pour, par exemple, d'autres types de sièges existants par ailleurs.

L'invention et ses avantages apparaîtront avec plus de détails dans le cadre de la description qui suit avec des exemples de réalisation donnés à titre illustratif en référence aux figures annexées qui représentent :
- les figures 1 à 8, des schémas de principe de sièges selon l'invention,
- les figures 9 à 15, deux exemples de réalisation d'un siège selon l'invention, et
- la figure 16, une vue de détail d'une quatrième liaison mécanique de ce siège.

Les éléments présents dans plusieurs figures distinctes sont affectés d'une seule et même référence.

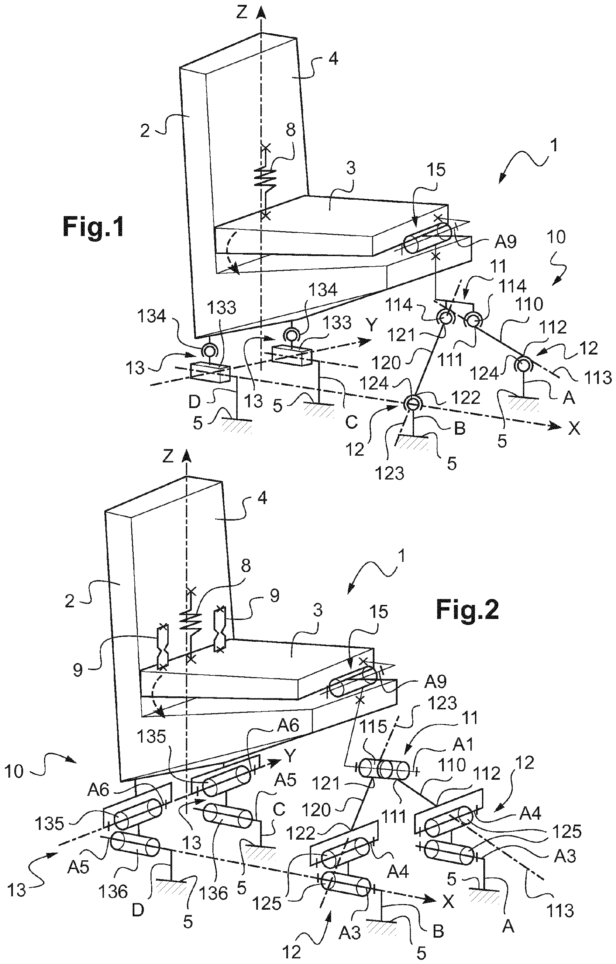

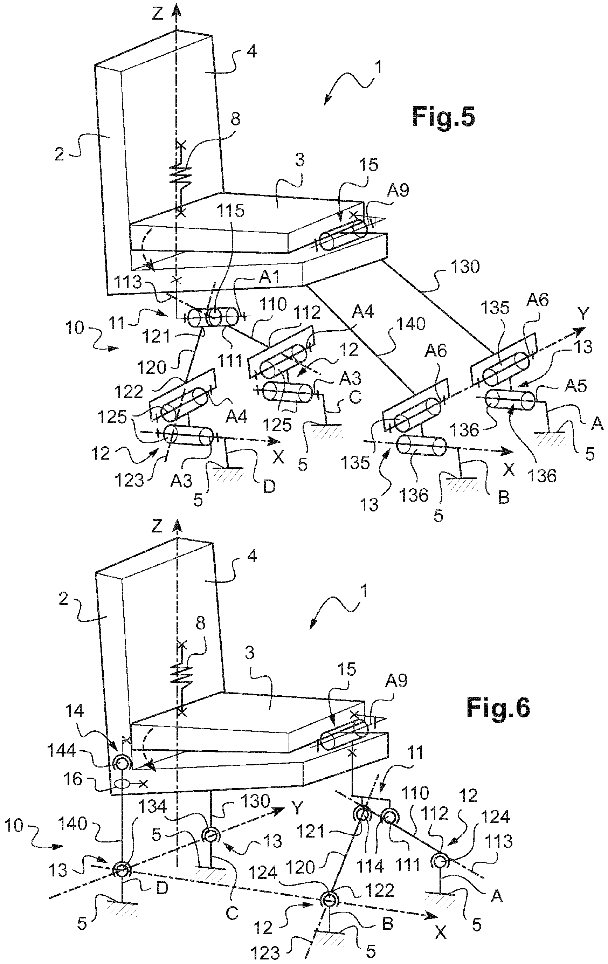

Les figures 1 à 5 représentent cinq schémas de principe de différentes variantes d'un siège 1 selon un premier mode de réalisation de l'invention. Les figures 6 à 8 représentent trois schémas de principe de trois variantes d'un siège 1 selon un deuxième mode de réalisation de l'invention. Ces schémas de principe représentent les différentes liaisons cinématiques du siège 1 selon l'invention.

De façon commune à chaque mode de réalisation, le siège 1 comporte un piètement 10 et un baquet 2 muni d'une assise 3 et d'un dossier 4. Le siège 1 comporte également un système de retenue non représenté et un dispositif d'absorption d'énergie 8.

Un tel siège 1 est destiné à être installé à l'intérieur d'un véhicule et en particulier à l'intérieur d'une cabine d'un aéronef. Le piètement 10 permet de fixer le baquet 2 à un plancher 5 du véhicule. Le plancher 5 d'un aéronef comporte généralement des rails 51,52 dans lesquels est fixé le piètement 10 par l'intermédiaire de trois ou quatre points de fixations A,B,C,D. Ces rails 51,52 sont en général agencés de façon longitudinale dans le véhicule, mais peuvent également être implantés différemment, par exemple de façon transversale.

Un repère orthogonal X,Y,Z est attaché à chaque siège 1. Une direction longitudinale X s'étend de l'arrière du siège 1 vers l'avant du siège 1, à savoir du dossier 4 vers le nez de l'assise 3 et une direction transversale Y s'étend d'un flanc de l'assise 3 vers l'autre flanc de l'assise 3 perpendiculairement à la direction longitudinale X. Une direction d'élévation Z s'étend de bas en haut, à savoir du plancher 5 vers l'assise 3. Le dossier 4 est lié à l'assise 3 selon une direction sensiblement parallèle à la direction transversale Y.

Généralement, le siège 1 est implanté dans l'axe d'avancement du véhicule, les directions longitudinale X et transversale Y du siège 1 correspondant aux directions longitudinale et transversale du véhicule. Le siège 1 peut être implanté dans le sens d'avancement du véhicule, à savoir « face à la marche » ou bien dans le sens contraire à l'avancement du véhicule, à savoir « dos à la marche ». Toutefois, toute autre implantation du siège 1 dans le véhicule est également possible.

L'assise 3 est liée au baquet 2 par l'intermédiaire de ce dispositif d'absorption d'énergie 8 et par une cinquième liaison mécanique 15 formée par une liaison de type pivot autour d'un neuvième axe A9 parallèle à la direction transversale Y. Ainsi, lors d'une forte décélération verticale du siège 1 consécutive par exemple à un choc violent ou un accident du véhicule, le dispositif d'absorption d'énergie 8 se déploie pour dissiper au moins une partie de l'énergie due à cette décélération et l'assise 3 pivote autour du neuvième axe A9 via la cinquième liaison mécanique 15.

De plus, selon les variantes représentées sur les figures 2,3,7 et 8, le siège 1 comporte également deux moyens fusibles 9 reliant l'assise 3 au baquet 2. Ces moyens fusibles 9 évitent que le dispositif d'absorption d'énergie 8 soit sollicité en permanence, les moyens fusibles 9 assurant la liaison entre l'assise 3 et le baquet 2. Lors d'une forte sollicitation consécutive à une forte décélération verticale du siège 1, les moyens fusibles 9 cassent permettant alors le déploiement du dispositif d'absorption d'énergie 8.

Le piètement 10 d'un siège 1 selon les deux modes de réalisation comporte également deux premiers pieds 110,120 et des liaisons mécaniques 11,12,13. Chaque premier pied 110,120 est muni de deux extrémités 111,121,112,122 et est d'une part lié mécaniquement par une première extrémité 111,121 au baquet 2 par une première liaison mécanique 11 et d'autre part lié mécaniquement par une seconde extrémité 112,122 au plancher 5 par une deuxième liaison mécanique 12.

Les deux premiers pieds 110,120 sont agencés à l'avant du siège 1 selon la direction longitudinale X sur les schémas de principe des figures 1 à 4 alors que les deux premiers pieds 110,120 sont agencés à l'arrière du siège 1 selon la direction longitudinale X sur le schéma de principe de la figure 5. Par ailleurs, Chaque premier pied est rectiligne et agencé selon une première direction 113,123 qui relie ses deux extrémités 111,121,112,122. Les deux premières directions 113,123 formées par les deux premiers pieds 110,120 ne sont pas parallèles entre elles et forment un « V ».

Deux troisièmes liaisons mécaniques 13 relient également mécaniquement le baquet 2 au plancher 5 à l'arrière du siège 1.

Pour le premier mode de réalisation, le baquet 2 est relié au plancher 5 directement par les troisièmes liaisons mécaniques 13. Chaque troisième liaison mécanique 13 constitue une articulation entre le baquet 2 et le plancher 5.

Pour la variante de ce siège 1 selon ce premier mode de réalisation représentée sur la figure 1, chaque premier pied 110,120 est relié d'une part au plancher 5 par une liaison à rotule 124 constituant la deuxième liaison mécanique 12 et d'autre part au baquet 2 par une liaison à rotule 114 constituant la première liaison mécanique 11. De la sorte, les deux premiers pieds 110,120 sont reliés au plancher 5 en deux points de fixation avant A,B. Les deux premiers pieds 110,120 sont ainsi mobiles l'un par rapport à l'autre en rotation. Le baquet 2 est également relié au plancher 5 par deux articulations formées respectivement par une liaison à rotule 134 et une liaison à glissière 133 selon la direction longitudinale X et constituant les troisièmes liaisons mécaniques 13 en deux points de fixation arrière C,D. En outre, la forme en « V » des deux premières directions 113,123 a la pointe orientée vers le haut, c'est-à-dire vers l'assise 3.

Lorsque le plancher 5 se déforme, les points de fixation A,B,C,D se déplacent les uns par rapport aux autres. Notamment, les points de fixation A,B peuvent se déplacer l'un par rapport à l'autre, ce qui génère un déplacement d'un premier pied 110,120 par rapport à l'autre premier pied 110,120 et une variation de l'angle formé entre eux. Ce déplacement d'un premier pied 110,120 par rapport à l'autre est possible grâce aux liaisons à rotule 114,124. La déformation du plancher 5 entre les points de fixation A,B peut être compensée par le déplacement des premiers pieds 110,120.

Ces déplacements des premiers pieds 110,120 provoquent un basculement du baquet 2 dans son ensemble grâce aux liaisons à rotule 114,124,134 et à la liaison à glissière 133 entre le baquet 2 et le plancher 5 aux points de fixation C,D.

De même, un déplacement des points de fixation arrière C,D entre eux ou bien par rapport aux points de fixation avant A,B suite à la déformation du plancher 5 est compensé de manière analogue grâce aux différentes liaisons à rotule 114,124,134 et à la liaison à glissière 133 du piètement 10 du siège 1. Par suite, le baquet 2 se déplace et/ou s'incline, sans se vriller.

En outre, une souplesse du baquet 2 au niveau des liaisons à roule 124,134 avec le plancher 5 peut aussi contribuer à l'absence de vrillage en compensant les déformations du plancher 5.

Avantageusement, l'utilisation d'une interface isostatique entre le piètement 10 et le baquet 2 contribue également à ne pas transférer les déformations du plancher 5 au baquet 2.

Pour la variante du siège 1 selon ce premier mode de réalisation représentée sur la figure 2, chaque premier pied 110,120 est relié d'une part au plancher 5 par deux liaisons de type pivot 125 constituant la deuxième liaison mécanique 12 et d'autre part au baquet 2 par deux liaisons de type pivot 115 coaxiales constituant la première liaison mécanique 11. De la sorte, les deux premiers pieds 110,120 sont reliés au plancher 5 en deux points de fixation avant A,B. De plus, les deux premiers pieds 110,120 sont liés entre eux au niveau des liaisons de type pivot 115 et sont ainsi mobiles l'un par rapport à l'autre en rotation. Le baquet 2 est également relié au plancher 5 par une liaison de type pivot glissant 136 et une liaison de type pivot 135 constituant la troisième liaison mécanique 13 en deux points de fixation arrière C,D. Comme précédemment, la forme en « V » des deux premières directions 113,123 a la pointe orientée vers le haut, c'est-à-dire vers l'assise 3.

Les deux liaisons de type pivot 115 sont selon un premier axe A1, le premier axe A1 étant parallèle à la direction longitudinale X. Les liaisons de type pivot glissant 125 sont selon des troisième et quatrième axes A3,A4 non parallèles entre eux, le troisième axe A3 étant parallèle à la direction longitudinale X et le quatrième axe A4 état parallèle à la direction transversale Y.

La liaison de type pivot glissant 136 est selon un cinquième axe A5 et la liaison de type pivot 135 est selon un sixième axe A6, le cinquième axe A5 étant parallèle à la direction longitudinale X et le sixième axe A6 étant parallèle à la direction transversale Y.

La liaison entre les deux premiers pieds 110,120 au niveau des liaisons de type pivot 115 permet avantageusement que le piètement 10 ait une première interface isostatique comportant trois points de liaison avec le baquet 2 et une seconde interface comportant quatre points de liaison avec le plancher 5.

Le comportement de cette variante du siège 1 est sensiblement identique au comportement de la variante représentée à la figure 1. En effet, le remplacement des liaisons à rotule par une liaison de type pivot glissant et une liaison de type pivot ne supprime aucun degré de liberté et ne remet pas en cause ce comportement.

Notamment, les liaisons de type pivot glissant 125,135 avec le plancher 5 contribuent à l'absence de vrillage en compensant les déformations du plancher 5.

De plus, chaque liaison de type pivot glissant 126,136 et chaque liaison à glissière 133 comportent une friction et des butées évitant d'une part des déplacements intempestifs du piètement 10 et d'autre part limitant l'amplitude de ses déplacements en translation lors des déformations du plancher 5 ou bien d'une forte décélération subie par le siège 1.

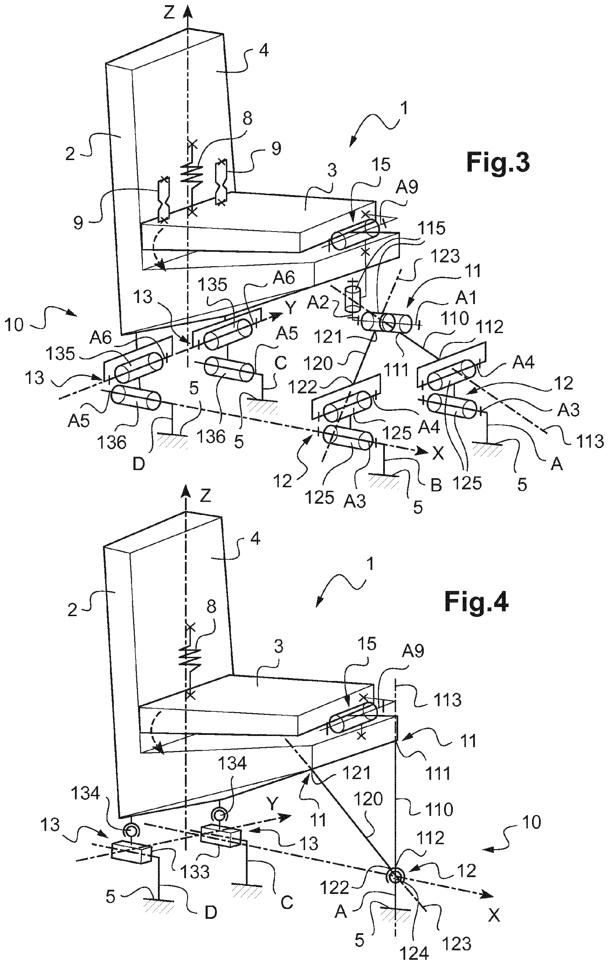

La variante du siège 1 selon ce premier mode de réalisation représentée sur la figure 3 est très proche de la variante représentée sur la figure 3. La différence se situe au niveau de la première liaison 11 qui comporte une liaison de type pivot 115 supplémentaire selon un deuxième axe A2 parallèle à la direction verticale Z.

La liaison de type pivot 115 supplémentaire entre les deux premiers pieds 110,120 et le baquet 2 permet avantageusement d'ajouter un degré de liberté entre le baquet 2 et le plancher 5. Le comportement de cette variante du siège 1 est ainsi sensiblement améliorée vis à vis du comportement de la variante représentée à la figure 2 lors d'un crash de l'aéronef comportant le siège 1 et des déformations du plancher 5 qui l'accompagnent.

Pour la variante du siège 1 selon ce premier mode de réalisation représentée sur la figure 4, chaque premier pied 110,120 est relié d'une part au plancher 5 par une même liaison à rotule 124 constituant la deuxième liaison mécanique 12 et d'autre part au baquet 2 par une liaison de type encastrement 11 constituant la première liaison mécanique 11. De la sorte, les deux premiers pieds 110,120 sont reliés au plancher 5 en un seul point de fixation avant A. Les deux premiers pieds 110,120 sont ainsi fixes l'un par rapport à l'autre et fixes également par rapport à l'assise 3. Le baquet 2 est également relié au plancher 5 par deux articulations formées respectivement par une liaison à rotule 134 et une liaison à glissière 133 selon la direction longitudinale X et constituant la troisième liaison mécanique 13 aux points de fixation arrière C,D. En outre, la forme en « V » des deux premières directions 113,123 a la pointe orientée vers le bas, c'est-à-dire vers le plancher 5.

La liaison entre les deux premiers pieds 110,120 au niveau de la liaison à rotule 124 permet avantageusement que le piètement 10 ait une première interface comportant quatre points de liaison avec le baquet 2 et une seconde interface isostatique comportant trois points de liaison avec le plancher 5.

L'utilisation d'un seul point de fixation A à l'avant du siège 1 permet d'éviter le déplacement d'un point de fixation par rapport à l'autre comme c'est le cas pour les sièges 1 représentés aux figures 1 à 3 pour les points de fixation avant A,B. Par suite, l'utilisation d'une seule liaison à rotule 124 permet d'absorber les déplacements de ce point de fixation avant A lors des déformations du plancher 5, et donc de supprimer tout degré de mobilité entre d'une part chacun des premiers pieds 110,120 et le baquet 2 et d'autre part les premiers pieds 110,120 entre eux.

De plus, les liaisons à rotule 134 et les liaisons à glissière 133 reliant le baquet 2 au plancher 5 par des points de fixation arrière C,D sont suffisantes afin de compenser les déformations du plancher 5 et les déplacements ainsi générés sur ces points de fixation arrière C,D.

De la sorte, comme pour les variantes du siège 1 représentées aux figures 1 à 3, le baquet 2 de la variante du siège 1 représentée sur la figure 4 peut se déplacer et/ou s'incliner lors des déformations du plancher 5 sans se vriller.

La variante du siège 1 selon ce premier mode de réalisation représentée sur la figure 5 comporte des premiers pieds 110,120 ainsi que des première, deuxième et troisième liaisons mécaniques 11,12,13 identiques à la variante représentée sur la figure 2. Les différences entre ces deux variantes se situent dans l'agencement de ces premiers pieds 110,120 et ces liaisons mécaniques 11,12,13 entre le siège 1 et le plancher 5. Pour cette variante représentée sur la figure 5, les premiers pieds 110,120 ainsi que les première et deuxième liaisons mécaniques 11,12 sont agencés à l'arrière du siège 1 selon la direction longitudinal X alors que chaque troisième liaison mécanique 13 est agencée à l'avant du siège 1. Des seconds pieds 130,140 permettent de relier chaque troisième liaison mécanique 13 avec le baquet 2 du siège 1. Ces seconds pieds 130,140 ne disposent d'aucun degré de liberté vis-à-vis du baquet 2.

De la sorte, le piètement 10 a, de façon similaire à la variante représentée sur la figure 2, une première interface isostatique comportant trois points de liaison avec le baquet 2 et une seconde interface comportant quatre points de liaison avec le plancher 5. Le comportement de cette variante du siège 1 est de fait sensiblement identique au comportement de la variante représentée à la figure 2.

Pour le deuxième mode de réalisation représenté sur les figures 6 à 8, le baquet 2 est relié au plancher 5 par l'intermédiaire de deux seconds pieds 130,140 et par des troisièmes et quatrièmes liaisons mécaniques 13,14.

Le piètement 10 comporte ainsi en complément des éléments du premier mode de réalisation deux seconds pieds 130,140 et deux quatrièmes liaisons mécaniques 14. Chaque second pied 130,140 relie le baquet 2 à une troisième liaison mécanique 13, chaque quatrième liaison mécanique 14 reliant un second pied 130,140 au baquet 2.

Pour la variante du siège 1 selon ce deuxième mode de réalisation représentée sur la figure 6, chaque premier pied 110,120 est relié, comme pour la variante de siège de la figure 1, d'une part au plancher 5 par une liaison à rotule 124 constituant la deuxième liaison mécanique 12 et d'autre part au baquet 2 par une liaison à rotule 114 constituant la première liaison mécanique 11. De la sorte, les deux premiers pieds 110,120 sont reliés au plancher 5 en deux points de fixation avant A,B. Les deux premiers pieds 110,120 sont ainsi mobiles l'un par rapport à l'autre en rotation. De même, la forme en « V » des deux premières directions 113,123 a la pointe orientée vers le haut, c'est-à-dire vers l'assise 3. Par ailleurs, chaque second pied 130,140 est relié au plancher 5 par deux liaisons à rotule 134 constituant les troisièmes liaisons mécaniques 13 en deux points de fixation arrière C,D.

Chaque quatrième liaison mécanique 14 est une liaison à rotule 144 et comporte un élément de blocage 16 constituant un élément de friction générant des frottements au sein de la liaison à rotule et empêchant un mouvement libre de cette quatrième liaison mécanique 14. Par suite, le mouvement en rotation d'un second pied 130,140 par rapport au baquet 2 est possible uniquement à partir d'un effort prédéterminé.

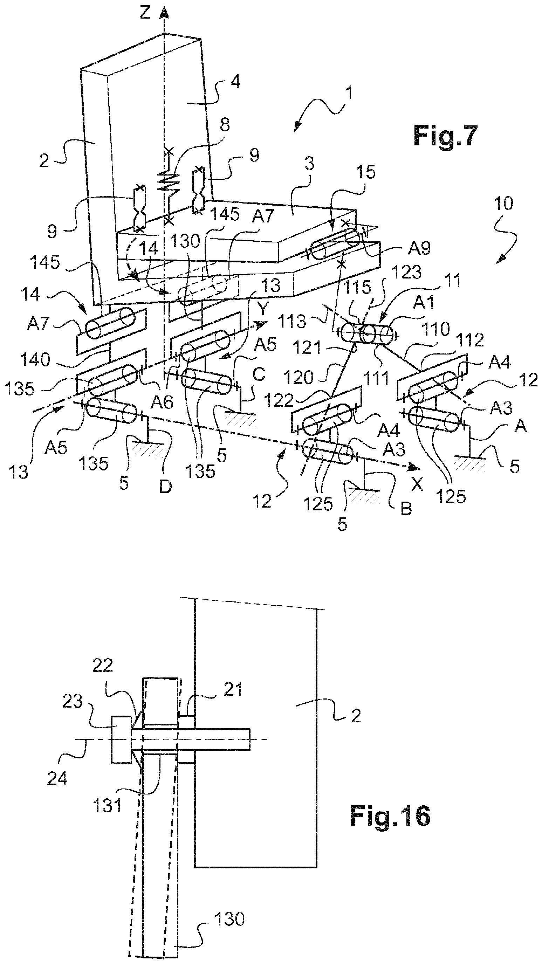

Un exemple de réalisation d'une telle quatrième liaison mécanique 14 est représenté sur la figure 16. Cette quatrième liaison mécanique 14 est formée par une entretoise 21, une rondelle souple 22 et un pion 23 cylindrique muni d'un axe 24. Le pion 23 est solidaire du baquet 2 et agencé dans un trou 131 que comporte le second pied 130. La rondelle souple 22 permet d'appliquer l'effort prédéterminé sur le second pied 130 qui immobilise le second pied 130 par rapport au baquet 2. Par suite, lorsque le second pied 130 subit un effort supérieur à cet effort prédéterminé, le second pied 130 peut se déplacer en rotation autour d'un axe perpendiculaire à l'axe 24 du pion 23. De plus, le second pied 130 peut également se déplacer autour de l'axe 24.

Pour la variante du siège 1 selon ce deuxième mode de réalisation représentée sur la figure 7, chaque premier pied 110,120 est relié d'une part au plancher 5 par deux liaisons de type pivot 125 constituant les deuxièmes liaisons mécaniques 12 et d'autre part au baquet 2 par deux liaisons de type pivot 115 coaxiales constituant la première liaison mécanique 11. De la sorte, les deux premiers pieds 110,120 sont reliés au plancher 5 en deux points de fixation avant A,B. De plus, les deux premiers pieds 110,120 sont liés entre eux au niveau des liaisons de type pivot 115 et sont ainsi mobiles l'un par rapport à l'autre en rotation. Comme précédemment, la forme en « V » des deux premières directions 113,123 a la pointe orientée vers le haut, c'est-à-dire vers l'assise 3.

Les liaisons de type pivot 115 sont selon un premier axe A1 parallèle à la direction longitudinale X. Les deux liaisons de type pivot 125 sont selon les troisième et quatrième axes A3,A4, le troisième axe A3 étant parallèle à la direction longitudinale X et le quatrième axe A4 état parallèle à la direction transversale Y.

Le baquet 2 est relié au plancher 5 en deux points de fixation arrière C,D par l'intermédiaire de deux seconds pieds 130,140 et de deux liaisons de type pivot 135 constituant les troisième liaisons mécaniques 13. Les deux liaisons de type pivot 135 sont selon les cinquième et sixième axes A5,A6, le cinquième axe A5 étant parallèle à la direction longitudinale X, le sixième axes A6 parallèle à la direction transversale Y.

Les seconds pieds 130,140 sont reliés au baquet 2 respectivement par une liaison de type pivot 145 constituant chaque quatrième liaison mécanique 14. Chaque liaison de type pivot 145 est selon un septième axe parallèle à la direction transversale Y.

La liaison entre les deux premiers pieds 110,120 au niveau d'une liaison de type pivot 115 permet avantageusement que le piètement 10 ait une première interface isostatique comportant trois points de liaison avec le baquet 2 et une seconde interface comportant quatre points de liaison avec le plancher 5.

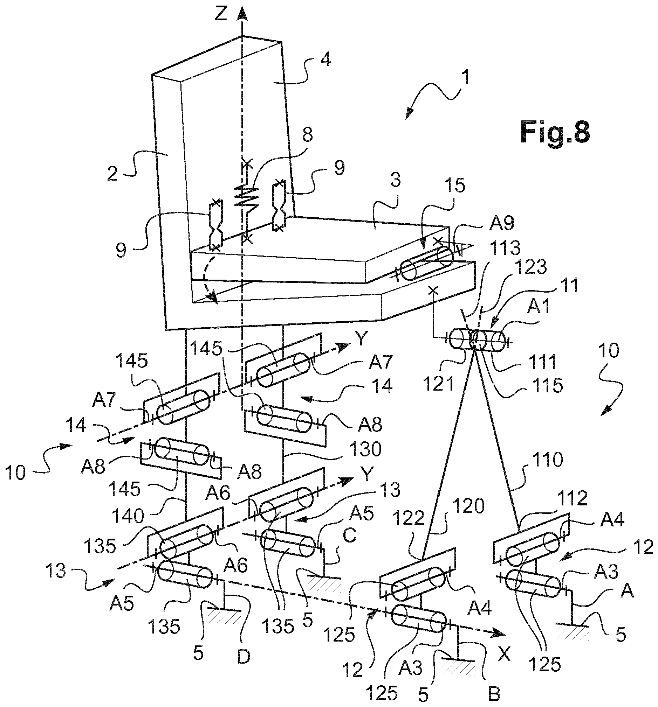

La variante du siège 1 selon ce deuxième mode de réalisation représentée sur la figure 8 est très proche de la variante représentée sur la figure 7. La différence se situe au niveau de la quatrième liaison 14 qui comporte une liaison de type pivot 145 supplémentaire selon un huitième axe A8 parallèle à la direction longitudinale X.

Le comportement de ces deux variantes du siège 1 est sensiblement identique au comportement de la variante représentée à la figure 6. En effet, le remplacement des liaisons à rotule par des liaisons de type pivot supprime un degré de liberté, mais sans remettre en cause ce comportement.

De plus, le comportement des variantes du siège 1 selon ce deuxième mode de réalisation représentées sur ces figures 6 à 8 est sensiblement identique au comportement des variantes du siège 1 selon le premier mode de réalisation représentées sur ces figures 1 à 5 lors de déformations du plancher 5. Le piètement 10 de ces sièges 1 permet ainsi d'absorber ces déformations du plancher 5 en limitant les contraintes mécaniques transmises au baquet 2 du siège 1 et éviter un vrillage ou une déformation du baquet 2.

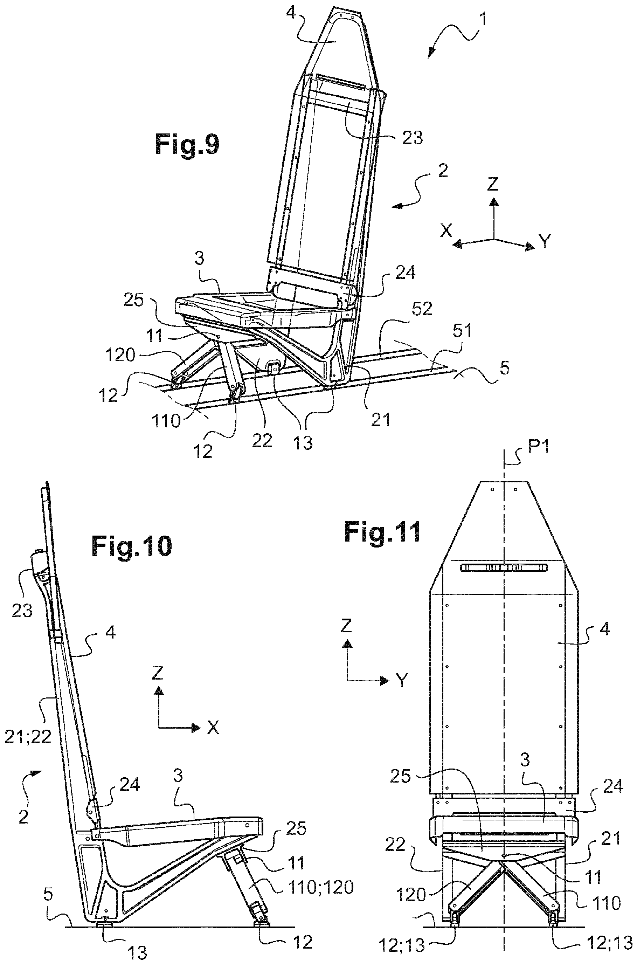

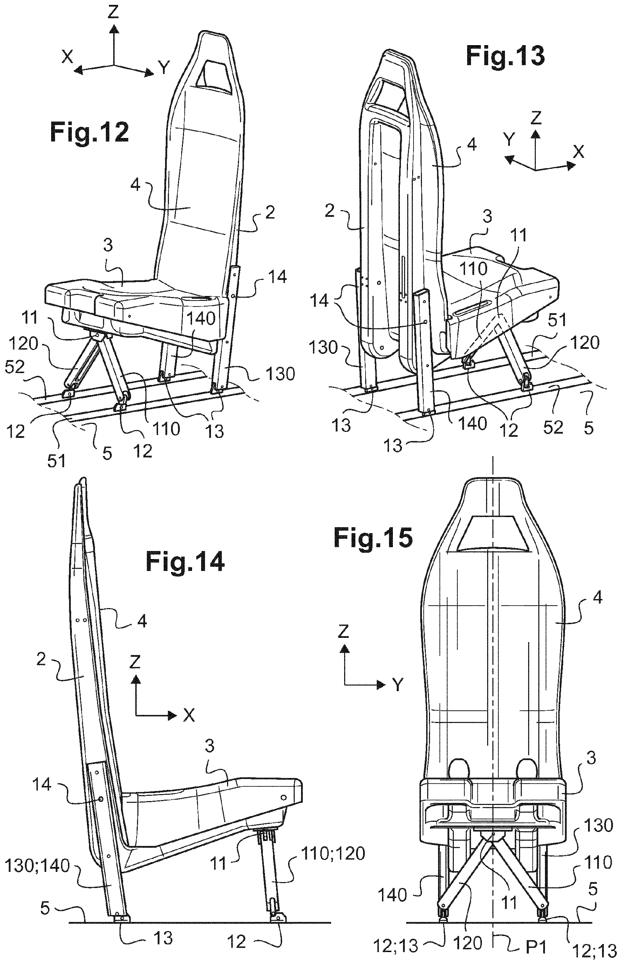

Un exemple de réalisation d'un siège 1 selon chaque mode de réalisation est représenté respectivement sur les figures 9 à 15. Un exemple de réalisation d'un siège 1 selon le premier mode de réalisation est représenté sur les figures 9 à 11 et selon le deuxième mode de réalisation sur les figures 12 à 15.

Pour le premier mode de réalisation, le baquet 2 du siège 1 est formé par deux « boomerangs » structurels 21,22 et par une traverse supérieure 23, une traverse inférieure 24 et une traverse avant 25 reliant ces deux boomerangs 21,22. Une assise 3 et un dossier 4 sont fixés à ce baquet 2.

Chaque boomerang 21,22 est fixé à un rail 51,52 du plancher 5 par une troisième liaison mécanique 13, telle une liaison à rotule. La traverse avant 25 est liée à chaque rail 51,52 du plancher 5 par l'intermédiaire de deux premiers pieds 110,120. Chaque premier pied 110,120 est lié d'une part à un rail 51,52 du plancher 5 par une deuxième liaison mécanique 12, telle une liaison à rotule et d'autre part à la traverse avant 25 par une première liaison mécanique 11, telle une liaison à rotule. Le piètement 10 de ce siège 1 est formé par les deux premiers pieds 110,120 et les liaisons mécaniques 11,12,13.

Les boomerangs 21,22, les traverses 23,24,25 et les premiers pieds 110,120 sont par exemple réalisés en aluminium, l'assise 3 et le dossier 4 pouvant être réalisés en matériaux composites.

Pour le deuxième mode de réalisation, le baquet 2 du siège 1 est monobloc et réalisé par exemple en matériaux composites. Le baquet 2 intègre l'assise 3 et le dossier 4. Le baquet 2 est fixé aux rails 51,52 du plancher 5 par l'intermédiaire des premiers pieds 110,120 et des seconds pieds 130,140.

Chaque premier pied 110,120 est lié d'une part à un rail 51,52 du plancher 5 par une deuxième liaison mécanique 12, telle une liaison à rotule et d'autre part au baquet 2 par une première liaison mécanique 11, telle une liaison à rotule. Chaque second pied 130,140 est lié d'une part à un rail 51,52 du plancher 5 par une troisième liaison mécanique 13, telle une liaison à rotule et d'autre part au baquet 2 par une quatrième liaison mécanique 14, telle une liaison à rotule. De fait, le piètement 10 de ce siège 1 est formé par les deux premiers pieds 110,120, les deux seconds pieds 130,140 et les liaisons mécaniques 11,12,13,14. Les premiers pieds 110,120 et les seconds pieds 130,140 sont par exemple réalisés en aluminium.

Pour ces deux modes de réalisation, le siège 1 représenté aux figures 9 à 15 comporte un plan de symétrie P1. Ce plan de symétrie P1 est parallèle à un plan formé par les directions longitudinale X et verticale Z du siège 1. Le piètement 10 est donc notamment symétrique par rapport à ce plan de symétrie P1.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Notamment, les deux premiers pieds 110,120 sont agencés à l'avant du siège 1 sur la majorité des schémas de principe et des exemples de réalisation représentés sur les figures alors que les troisièmes liaisons mécaniques 13 et, le cas échéant, les seconds pieds 130,140 sont agencés à l'arrière du siège 1. Toutefois, cette implantation peut être inversée comme représentée sur la figure 5 pour l'ensemble des variantes décrites, les deux premiers pieds 110,120 pouvant être agencés à l'arrière du siège 1 alors que les troisièmes liaisons mécaniques 13 et, le cas échéant, les seconds pieds 130,140 peuvent être agencés à l'avant du siège 1.

## Revendications

1. Siège (1) pour véhicule comportant un baquet (2) et un piètement (10), le baquet (2) comportant une assise (3) et un dossier (4), ledit piètement (10) étant destiné à fixer ledit baquet (2) à un plancher (5) dudit véhicule, dans lequel ledit piètement (10) comporte deux premiers pieds (110,120) longueur fixe et des liaisons mécaniques (11,12,13,14), chaque premier pied (110,120) étant muni de deux extrémités (111, 121, 112, 122) et étant d'une part lié mécaniquement par une desdites extrémités (111,121,112,122) audit baquet (2) par une première liaison mécanique (11) munie d'aucun degré de liberté en translation et d'autre part destiné à être lié mécaniquement par une autre desdites extrémités (111,121,112,122) audit plancher (5) par une deuxième liaison mécanique (12) munie d'au moins deux degrés de liberté et uniquement de degrés de liberté en rotation, deux premières directions (113,123) reliant respectivement lesdites deux extrémités (111,121,112,122) de chaque premier pied (110,120) n'étant pas parallèles entre elles, deux troisièmes liaisons mécaniques (13) munies respectivement d'au moins deux degrés de liberté en rotation étant destinées à lier mécaniquement ledit baquet (2) audit plancher (5) afin que ledit piètement (10) soit apte à absorber des déformations dudit plancher (5) en limitant les contraintes mécaniques transmises audit baquet (2) et évitant un vrillage dudit baquet (2).

2. Siège (1) selon la revendication 1,
**caractérisé en ce que** lesdits deux premiers pieds (110,120) sont liés mécaniquement entre eux à une de leurs extrémités (111,121,112,122) au niveau de ladite première liaison mécanique (11) afin que ledit piètement (10) ait une première interface comportant trois points de liaison avec ledit baquet (2) et une seconde interface comportant quatre points de liaison avec ledit plancher (5), les deux premiers pieds (110,120) ayant au moins un degré de liberté en rotation entre eux, chaque première liaison mécanique (11) étant munie d'au moins un degré de liberté en rotation.

3. Siège (1) selon la revendication 1,
**caractérisé en ce que** lesdits deux premiers pieds (110,120) sont liés mécaniquement entre eux à une de leurs extrémités (111,121,112,122) au niveau de ladite deuxième liaison mécanique (12) afin que ledit piètement (10) ait une première interface comportant quatre points de liaison avec ledit baquet (2) et une seconde interface comportant trois points de liaison avec ledit plancher (5).

4. Siège (1) selon l'une quelconque des revendications 1 à 3,
**caractérisé en ce que** chaque première liaison mécanique (11) et chaque deuxième liaison mécanique (12) sont munies de trois degrés de liberté en rotation et formées respectivement par une liaison à rotule.

5. Siège (1) selon l'une quelconque des revendications 1 à 3,
**caractérisé en ce que** chaque première liaison mécanique (11) est munie d'un degré de liberté en rotation selon un premier axe (A1) et chaque deuxième liaison mécanique (12) est munie de deux degrés de liberté en rotation selon des troisième et quatrième axes (A3,A4) non parallèles entre eux, ledit premier axe (A1) étant parallèle à un desdits troisième et quatrième axes (A3,A4).

6. Siège (1) selon la revendication 5,
**caractérisé en ce que** chaque première liaison mécanique (11) est munie d'un deuxième degré de liberté en rotation selon un deuxième axe (A2) non parallèle audit premier axe (A1).

7. Siège (1) selon l'une quelconque des revendications 5 à 6,
**caractérisé en ce que** chaque première liaison mécanique (11) ou bien chaque deuxième liaison mécanique (12) est munie d'un troisième degré de liberté en rotation.

8. Siège (1) selon l'une quelconque des revendications 5 à 7,
**caractérisé en ce que**, des directions longitudinale X, transversale Y et verticale Z formant un repère orthogonal étant attachées audit siège (1), ladite direction longitudinale X s'étendant de l'arrière dudit siège (1) vers l'avant dudit siège (1), ladite direction transversale Y s'étendant d'un flanc de ladite assise (3) vers l'autre flanc de ladite assise (3), ladite direction verticale Z s'étendant dudit plancher (5) vers ladite assise (3), lesdits premier et troisième axes (A1,A3) sont parallèles à ladite direction longitudinale X, ledit quatrième axe (A4) est parallèle à ladite direction transversale Y et, le cas échéant, ledit deuxième axe (A2) est parallèle à ladite direction verticale Z.

9. Siège (1) selon l'une quelconque des revendications 5 à 7,
**caractérisé en ce que**, des directions longitudinale X, transversale Y et verticale Z formant un repère orthogonal étant attachées audit siège (1), ladite direction longitudinale X s'étendant de l'arrière dudit siège (1) vers l'avant dudit siège (1), ladite direction transversale Y s'étendant d'un flanc de ladite assise (3) vers l'autre flanc de ladite assise (3), ladite direction verticale Z s'étendant dudit plancher (5) vers ladite assise (3), lesdits premier et troisième axes (A1,A3) sont parallèles à ladite direction longitudinale X, ledit quatrième axe (A4) est parallèle à ladite direction transversale Y et, le cas échéant, ledit deuxième axe (A2) est parallèle à ladite direction transversale Y.

10. Siège (1) selon la revendication 3,
**caractérisé en ce que** chaque première liaison mécanique (11) n'est munie d'aucun degré de liberté et est formée par une liaison de type encastrement, les deux premiers pieds (110,120) n'ayant aucun degré de liberté entre eux.

11. Siège (1) selon l'une quelconque des revendications 1 à 10,
**caractérisé en ce que** chaque troisième liaison mécanique (13) est munie de deux degrés de liberté en rotation selon des cinquième et sixième axes (A5,A6) non parallèles entre eux.

12. Siège (1) selon la revendication 11,
**caractérisé en ce que** chaque troisième liaison mécanique (13) est munie d'un troisième degré de liberté en rotation.

13. Siège (1) selon l'une quelconque des revendications 11 à 12,
**caractérisé en ce que**, chaque deuxième liaison mécanique (12) étant munie de deux degrés de liberté en rotation selon des troisième et quatrième axes (A3,A4) non parallèles entre eux, ledit cinquième axe (A5) est parallèle audit troisième axe (A3) et ledit sixième axe (A6) est parallèle audit quatrième axe (A4).

14. Siège (1) selon l'une quelconque des revendications 11 à 13,
**caractérisé en ce que** chaque troisième liaison mécanique (13) est munie d'un degré de liberté en translation selon ledit cinquième axe (A5).

15. Siège (1) selon l'une quelconque des revendications 11 à 13,
**caractérisé en ce que** ledit piètement (10) comporte des seconds pieds (130,140) et des quatrièmes liaisons mécaniques (14)munie d'au moins un degré de liberté en rotation, chaque second pied (130,140) reliant ledit baquet (2) à une troisième liaison mécanique (13), chaque quatrième liaison mécanique (14) reliant un second pied (130,140) audit baquet (2).

16. Siège (1) selon la revendication 15,
**caractérisé en ce que** chaque quatrième liaison mécanique (14) est munie d'un degré de liberté en rotation selon un septième axe (A7) et formée par une liaison de type pivot.

17. Siège (1) selon la revendication 16,
**caractérisé en ce que** chaque quatrième liaison mécanique (14) est munie de deux degrés de liberté en rotation selon des septième et huitième axes (A7,A8) non parallèles entre eux et formée par deux liaisons de type pivot.

18. Siège (1) selon l'une quelconque des revendications 16 à 17,
**caractérisé en ce que**, chaque troisième liaison mécanique (13) étant munie de deux degrés de liberté en rotation selon des cinquième et sixième axes (A5,A6), ledit septième axe (A7) est parallèle audit sixième axe (A6) et le cas échéant, ledit huitième axe (A8) est parallèle audit cinquième axe (A5).

19. Siège (1) selon l'une quelconque des revendications 16 à 18,
**caractérisé en ce que** chaque quatrième liaison mécanique (14) comporte au moins un élément de blocage (16) constituant une butée limitant le déplacement en rotation d'un second pied (130,140).

20. Siège (1) selon l'une quelconque des revendications 16 à 19,
**caractérisé en ce que** chaque quatrième liaison mécanique (14) comporte au moins un élément de blocage (16) constituant un élément de friction générant des frottements au sein de ladite quatrième liaison mécanique (14).

21. Siège (1) selon l'une quelconque des revendications 1 à 20,
**caractérisé en ce que** deux premiers pieds (110,120) sont agencés à l'avant dudit siège (1).

22. Siège (1) selon l'une quelconque des revendications 1 à 20,
**caractérisé en ce que** deux premiers pieds (110,120) sont agencés à l'arrière dudit siège (1).

23. Siège (1) selon l'une quelconque des revendications 1 à 22,
**caractérisé en ce que** ledit siège (1) comporte au moins un dispositif d'absorption d'énergie (8) et une cinquième liaison mécanique (15) de type pivot selon un neuvième axe (A9), ladite assise (3) étant liée audit baquet (2) d'une part par chaque dispositif d'absorption d'énergie (8) et d'autre part par ladite cinquième liaison mécanique (15) afin de dissiper de l'énergie lors d'un accident dudit véhicule.

## Patentansprüche

1. Sitz (1) für ein Fahrzeug, umfassend eine Sitzschale (2) und eine Basis (10), wobei die Sitzschale (2) eine Sitzfläche (3) und eine Rückenlehne (4) umfasst, wobei die Basis (10) dazu bestimmt ist, die Sitzschale (2) an einem Boden (5) des Fahrzeugs zu befestigen, wobei die Basis (10) zwei erste Füße (110, 120) mit fester Länge und mechanische Verbindungen (11, 12, 13, 14) umfasst, wobei jeder erste Fuß (110, 120) mit zwei Enden (111, 121, 112, 122) versehen ist und einerseits mechanisch über eines der Enden (111, 121, 112, 122) mit der der Sitzschale (2) durch eine erste mechanische Verbindung (11) ohne Freiheitsgrad der Translation verbunden ist, und andererseits vorgesehen ist, um über ein anderes der Enden (111, 121, 112, 122) mit dem Boden (5) durch eine zweite mechanische Verbindung (12) verbunden zu werden, die mindestens zwei Freiheitsgrade und nur Rotationsfreiheitsgrade aufweist,
wobei zwei erste Richtungen (113, 123), die jeweils die beiden Enden (111, 121, 112, 122) jedes ersten Fußes (110, 120) verbinden, nicht parallel zueinander sind, wobei zwei dritte mechanische Verbindungen (13), die jeweils mindestens zwei Rotationsfreiheitsgrade aufweisen, vorgesehen sind, um die Sitzschale (2) mechanisch mit dem Boden (5) zu verbinden, so dass die Basis (10) in der Lage ist, Verformungen des Bodens (5) aufzunehmen und so die auf die Sitzschale (2) übertragenen mechanischen Spannungen zu begrenzen und ein Verdrillen der Sitzschale (2) zu vermeiden.

2. Sitz (1) nach Anspruch 1,
**dadurch gekennzeichnet, dass** die beiden ersten Füße (110, 120) an einem ihrer Enden (111, 121, 112, 122) an der ersten mechanischen Verbindung (11) mechanisch miteinander verbunden sind, so dass die Basis (10) eine erste Schnittstelle mit drei Verbindungspunkten zu der Sitzschale (2) und eine zweite Schnittstelle mit vier Verbindungspunkten zu dem Boden (5) aufweist, und
die ersten beiden Füße (110, 120) untereinander mindestens einen Rotationsfreiheitsgrad aufweisen, wobei jede erste mechanische Verbindung (11) mindestens einen Rotationsfreiheitsgrad aufweist.

3. Sitz (1) nach Anspruch 1,
**dadurch gekennzeichnet, dass** die beiden ersten Füße (110, 120) an einem ihrer Enden (111, 121, 112, 122) an der zweiten mechanischen Verbindung (12) mechanisch miteinander verbunden sind, so dass die Basis (10) eine erste Schnittstelle mit vier Verbindungspunkten zu der Sitzschale (2) und eine zweite Schnittstelle mit drei Verbindungspunkten zu dem Boden (5) aufweist.

4. Sitz (1) nach einem der Ansprüche 1 bis 3,
**dadurch gekennzeichnet, dass** jede erste mechanische Verbindung (11) und jede zweite mechanische Verbindung (12) drei Rotationsfreiheitsgrade aufweist und jeweils durch eine Kugelgelenkverbindung gebildet ist.

5. Sitz (1) nach einem der Ansprüche 1 bis 3, **dadurch gekennzeichnet, dass** jede erste mechanische Verbindung (11) einen Rotationsfreiheitsgrad entlang einer ersten Achse (A1) und jede zweite mechanische Verbindung (12) zwei Rotationsfreiheitsgrade entlang einer dritten und einer vierten Achse (A3, A4) aufweist, die nicht parallel zueinander verlaufen, wobei die erste Achse (A1) parallel zu einer der dritten und vierten Achsen (A3, A4) verläuft.

6. Sitz (1) nach Anspruch 5,
**dadurch gekennzeichnet, dass** jede erste mechanische Verbindung (11) einen zweiten Rotationsfreiheitsgrad entlang einer zweiten Achse (A2) aufweist, die nicht parallel zu der ersten Achse (A1) ist.

7. Sitz (1) nach einem der Ansprüche 5 bis 6,
**dadurch gekennzeichnet, dass** jede erste mechanische Verbindung (11) oder jede zweite mechanische Verbindung (12) einen dritten Rotationsfreiheitsgrad aufweist.

8. Sitz (1) nach einem der Ansprüche 5 bis 7,
**dadurch gekennzeichnet, dass** die Längsrichtung X, die Querrichtung Y und die vertikale Richtung Z ein an dem Sitz (1) festes orthogonales Bezugssystem bilden, wobei sich die Längsrichtung X von der Rückseite des Sitzes (1) zur Vorderseite des Sitzes (1) erstreckt, wobei sich die Querrichtung Y von einer Flanke der Sitzfläche (3) zur anderen Flanke der Sitzfläche (3) erstreckt, die vertikale Richtung Z sich vom Boden (5) zur Sitzfläche (3) erstreckt, wobei die erste und dritte Achse (A1, A3) parallel zur Längsrichtung X sind, die vierte Achse (A4) parallel zur Querrichtung Y ist und gegebenenfalls die zweite Achse (A2) parallel zur vertikalen Richtung Z ist.

9. Sitz (1) nach einem der Ansprüche 5 bis 7,
**dadurch gekennzeichnet, dass** die Längsrichtung X, die Querrichtung Y und die vertikale Richtung Z ein an dem Sitz (1) festes orthogonales Bezugssystem bilden, wobei sich die Längsrichtung X von der Rückseite des Sitzes (1) zur Vorderseite des Sitzes (1) erstreckt, wobei sich die Querrichtung Y von einer Flanke der Sitzfläche (3) zur anderen Flanke der Sitzfläche (3) erstreckt, die vertikale Richtung Z sich vom Boden (5) zur Sitzfläche (3) erstreckt, wobei die erste und dritte Achse (A1, A3) parallel zur Längsrichtung X sind, die vierte Achse (A4) parallel zur Querrichtung Y ist und gegebenenfalls die zweite Achse (A2) parallel zur vertikalen Richtung Z ist.

10. Sitz (1) nach Anspruch 3,
**dadurch gekennzeichnet, dass** jede erste mechanische Verbindung (11) keinen Freiheitsgrad aufweist und durch eine flächenbündige Verbindung gebildet ist, wobei die beiden ersten Füße (110, 120) untereinander keinen Freiheitsgrad aufweisen.

11. Sitz (1) nach einem der Ansprüche 1 bis 10,
**dadurch gekennzeichnet, dass** jede dritte mechanische Verbindung (13) zwei Rotationsfreiheitsgrade entlang einer fünften und einer sechsten Achse (A5, A6) aufweist, die nicht parallel zueinander sind.

12. Sitz (1) nach Anspruch 11,
**dadurch gekennzeichnet, dass** jede dritte mechanische Verbindung (13) einen dritten Rotationsfreiheitsgrad aufweist.

13. Sitz (1) nach einem der Ansprüche 11 bis 12,
**dadurch gekennzeichnet, dass** jede zweite mechanische Verbindung (12) zwei Rotationsfreiheitsgrade entlang einer dritten und einer vierten Achse (A3, A4) aufweist, die nicht parallel zueinander sind, wobei die fünfte Achse (A5) parallel zu der dritten Achse (A3) und die sechste Achse (A6) parallel zu der vierten Achse (A4) ist.

14. Sitz (1) nach einem der Ansprüche 11 bis 13,
**dadurch gekennzeichnet, dass** jede dritte mechanische Verbindung (13) einen Translationsfreiheitsgrad entlang der fünften Achse (A5) aufweist.

15. Sitz (1) nach einem der Ansprüche 11 bis 13,
**dadurch gekennzeichnet, dass** die Basis (10) zweite Füße (130, 140) und vierte mechanische Verbindungen (14) aufweist, die mindestens einen Rotationsfreiheitsgrad aufweisen, wobei jeder zweite Fuß (130, 140) die Sitzschale (2) mit einer dritten mechanischen Verbindung (13) verbindet und jede vierte mechanische Verbindung (14) einen zweiten Fuß (130, 140) mit der Sitzschale (2) verbindet.

16. Sitz (1) nach Anspruch 15,
**dadurch gekennzeichnet, dass** jede vierte mechanische Verbindung (14) einen Rotationsfreiheitsgrad entlang einer siebten Achse (A7) aufweist und durch eine Schwenkverbindung gebildet ist.

17. Sitz (1) nach Anspruch 16,
**dadurch gekennzeichnet, dass** jede vierte mechanische Verbindung (14) zwei Rotationsfreiheitsgrade entlang einer siebten und einer achten Achse (A7, A8) aufweist, die nicht parallel zueinander verlaufen und durch zwei Schwenkverbindungen gebildet sind.

18. Sitz (1) nach einem der Ansprüche 16 bis 17,
**dadurch gekennzeichnet, dass** jede dritte mechanische Verbindung (13) zwei Rotationsfreiheitsgrade entlang einer fünften und einer sechsten Achse (A5, A6) aufweist, wobei die siebte Achse (A7) parallel zur sechsten Achse (A6) verläuft und gegebenenfalls die achte Achse (A8) parallel zur fünften Achse (A5) ist.

19. Sitz (1) nach einem der Ansprüche 16 bis 18,
**dadurch gekennzeichnet, dass** jede vierte mechanische Verbindung (14) mindestens ein Blockierelement (16) umfasst, das einen die Drehbewegung eines zweiten Fußes (130, 140) begrenzenden Anschlag bildet.

20. Sitz (1) nach einem der Ansprüche 16 bis 19,
**dadurch gekennzeichnet, dass** jede vierte mechanische Verbindung (14) mindestens ein Blockierelement (16) umfasst, das ein Reibung innerhalb der vierten mechanischen Verbindung (14) erzeugendes Reibungselement bildet.

21. Sitz (1) nach einem der Ansprüche 1 bis 20,
**dadurch gekennzeichnet, dass** zwei erste Füße (110, 120) an der Vorderseite des Sitzes (1) angeordnet sind.

22. Sitz (1) nach einem der Ansprüche 1 bis 20,
**dadurch gekennzeichnet, dass** zwei erste Füße (110, 120) an der Rückseite des Sitzes (1) angeordnet sind.

23. Sitz (1) nach einem der Ansprüche 1 bis 22,
**dadurch gekennzeichnet, dass** der Sitz (1) mindestens eine Energieabsorptionsvorrichtung (8) und eine fünfte mechanische Verbindung (15) vom Schwenktyp entlang einer neunten Achse (A9) umfasst, wobei die Sitzfläche (3) einerseits durch jede Energieabsorptionsvorrichtung (8) und andererseits durch die fünfte mechanische Verbindung (15) mit der Sitzschale (2) verbunden ist, um bei einem Unfall des Fahrzeugs Energie abzubauen.

## Claims

1. Seat (1) for a vehicle, comprising a bucket (2) and a base (10), the bucket (2) comprising a seat portion (3) and a backrest (4), said base (10) being intended to attach said bucket (2) to a floor (5) of said vehicle, wherein said base (10) comprises two first legs (110, 120) of fixed length and mechanical connections (11, 12, 13, 14), each first leg (110, 120) having two ends (111, 121, 112, 122) and being, on the one hand, mechanically connected by one of said ends (111, 121, 112, 122) to said bucket (2) by a first mechanical connection (11) which has no degree of freedom in translation and, on the other hand, intended to be mechanically connected by another one of said ends (111, 121, 112, 122) to said floor (5) by a second mechanical connection (12) which has at least two degrees of freedom and only degrees of freedom in rotation, two first directions (113, 123) coupling said two ends (111, 121, 112, 122) of each first leg (110, 120), said two ends not being mutually parallel, two third mechanical connections (13) which have in each case at least two degrees of freedom in rotation being intended to mechanically connect said bucket (2) to said floor (5) so that said base (10) is capable of absorbing deformations of said floor (5) while limiting the mechanical stresses that are transmitted to said bucket (2) and while preventing twisting of said bucket (2).

2. Seat (1) according to claim 1, **characterised in that** said two first legs (110, 120) are mechanically interconnected at one of their ends (111, 121, 112, 122) at said first mechanical connection (11) so that said base (10) has a first interface comprising three points of connection to said bucket (2) and a second interface comprising four points of connection to said floor (5), the first two legs (110, 120) having at least one degree of freedom in rotation relative to one another, each first mechanical connection (11) having at least one degree of freedom in rotation.

3. Seat (1) according to claim 1, **characterised in that** said first two legs (110, 120) are mechanically interconnected at one of their ends (111, 121, 112, 122) at said second mechanical connection (12) so that said base (10) has a first interface comprising four points of connection to said bucket (2) and a second interface comprising three points of connection to said floor (5).

4. Seat (1) according to any of claims 1 to 3, **characterised in that** each first mechanical connection (11) and each second mechanical connection (12) have three degrees of freedom in rotation, and are formed in each case by a ball joint connection.

5. Seat (1) according to any of claims 1 to 3, **characterised in that** each first mechanical connection (11) has a degree of freedom in rotation along a first axis (A1) and each second mechanical connection (12) has two degrees of freedom in rotation along third and fourth axes (A3, A4) which are not mutually parallel, said first axis (A1) being parallel to one of said third and fourth axes (A3, A4).

6. Seat (1) according to claim 5, **characterised in that** each first mechanical connection (11) has a second degree of freedom in rotation along a second axis (A2) which is not parallel to said first axis (A1).

7. Seat (1) according to either claim 5 or claim 6, **characterised in that** each first mechanical connection (11) or each second mechanical connection (12) has a third degree of freedom in rotation.

8. Seat (1) according to any of claims 5 to 7, **characterised in that**, longitudinal X, transverse Y and vertical Z directions that form an orthogonal frame of reference being associated with said seat (1), said longitudinal direction X extending from the rear of said seat (1) to the front of said seat (1), said transverse direction Y extending from one side of said seat portion (3) to the other side of said seat portion (3), said vertical direction Z extending from said floor (5) to said seat portion (3), said first and third axes (A1, A3) are parallel to said longitudinal direction X, said fourth axis (A4) is parallel to said transverse direction Y and, optionally, said second axis (A2) is parallel to said vertical direction Z.

9. Seat (1) according to any of claims 5 to 7, **characterised in that**, longitudinal X, transverse Y and vertical Z directions that form an orthogonal frame of reference being associated with said seat (1), said longitudinal direction X extending from the rear of said seat (1) to the front of said seat (1), said transverse direction Y extending from one side of said seat portion (3) to the other side of said seat portion (3), said vertical direction Z extending from said floor (5) to said seat portion (3), said first and third axes (A1, A3) are parallel to said longitudinal direction X, said fourth axis (A4) is parallel to said transverse direction Y and, optionally, said second axis (A2) is parallel to said transverse direction Y.

10. Seat (1) according to claim 3, **characterised in that** each first mechanical connection (11) has no degree of freedom and is formed by a fitting connection, the first two legs (110, 120) having no degree of freedom relative to one another.

11. Seat (1) according to any of claims 1 to 10, **characterised in that** each third mechanical connection (13) has two degrees of freedom in rotation along fifth and sixth axes (A5, A6) which are not mutually parallel.

12. Seat (1) according to claim 11, **characterised in that** each third mechanical connection (13) has a third degree of freedom in rotation.

13. Seat (1) according to either claim 11 or claim 12, **characterised in that**, each second mechanical connection (12) having two degrees of freedom in rotation along third and fourth axes (A3, A4) which are not mutually parallel, said fifth axis (A5) is parallel to said third axis (A3) and said sixth axis (A6) is parallel to said fourth axis (A4).

14. Seat (1) according to any of claims 11 to 13, **characterised in that** each third mechanical connection (13) has a degree of freedom in translation along said fifth axis (A5).

15. Seat (1) according to any of claims 11 to 13, **characterised in that** said base (10) comprises second legs (130, 140) and fourth mechanical connections (14), which connections have at least one degree of freedom in rotation, each second leg (130, 140) coupling said bucket (2) to a third mechanical connection (13), each fourth mechanical connection (14) coupling a second leg (130, 140) to said bucket (2).

16. Seat (1) according to claim 15, **characterised in that** each fourth mechanical connection (14) has a degree of freedom in rotation along a seventh axis (A7) and is formed by a pivot connection.

17. Seat (1) according to claim 16, **characterised in that** each fourth mechanical connection (14) has two degrees of freedom in rotation along seventh and eighth axes (A7, A8) which are not mutually parallel, and is formed by two pivot connections.

18. Seat (1) according to either claim 16 or claim 17, **characterised in that**, each third mechanical connection (13) having two degrees of freedom in rotation along fifth and sixth axes (A5, A6), said seventh axis (A7) is parallel to said sixth axis (A6) and, optionally, said eighth axis (A8) is parallel to said fifth axis (A5).

19. Seat (1) according to any of claims 16 to 18, **characterised in that** each fourth mechanical connection (14) comprises at least one locking element (16) constituting a stop that limits the rotational movement of a second leg (130, 140).

20. Seat (1) according to any of claims 16 to 19, **characterised in that** each fourth mechanical connection (14) comprises at least one locking element (16) forming a friction element that produces rubbing within said fourth mechanical connection (14).

21. Seat (1) according to any of claims 1 to 20, **characterised in that** two first legs (110, 120) are arranged in front of said seat (1).

22. Seat (1) according to any of claims 1 to 20, **characterised in that** two first legs (110, 120) are arranged to the rear of said seat (1).

23. Seat (1) according to any of claims 1 to 22, **characterised in that** said seat (1) comprises at least one energy absorbing device (8) and a fifth mechanical pivot connection (15) along a ninth axis (A9), said seat portion (3) being connected to said bucket (2) on the one hand by each energy absorbing device (8) and on the other hand by said fifth mechanical connection (15) in order to dissipate energy during an accident of said vehicle.
